(19) Europäisches Patentamt
European Patent Office
Office européen des brevets

(11) **EP 4 206 632 A1**

(12) **EUROPEAN PATENT APPLICATION**
published in accordance with Art. 153(4) EPC

(43) Date of publication:
**05.07.2023 Bulletin 2023/27**

(21) Application number: **21910048.4**

(22) Date of filing: **16.11.2021**

(51) International Patent Classification (IPC):
***G01J 5/48*** (2022.01)  ***G01V 8/10*** (2006.01)
***G01V 8/20*** (2006.01)

(52) Cooperative Patent Classification (CPC):
**G01J 5/0025; G01J 5/48; G01V 8/10; G01V 8/20**

(86) International application number:
**PCT/JP2021/042113**

(87) International publication number:
**WO 2022/137895 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 JP 2020211639**

(71) Applicant: **Mitsubishi Heavy Industries Thermal
Systems, Ltd.
Tokyo, 100-8332 (JP)**

(72) Inventors:
• **SASAKI Yusei
Tokyo 100-8332 (JP)**
• **NAKAMOTO Yohei
Tokyo 100-8332 (JP)**
• **ADACHI Takehiro
Tokyo 100-8332 (JP)**
• **NUNOME Yoshinori
Tokyo 100-8332 (JP)**
• **MASHIKO Kodai
Tokyo 100-8332 (JP)**

(74) Representative: **Cabinet Beau de Loménie
158, rue de l'Université
75340 Paris Cedex 07 (FR)**

(54) **TEMPERATURE MEASUREMENT VALUE PROCESSING DEVICE, HEAT GENERATION BODY DETECTION DEVICE, TEMPERATURE MEASUREMENT VALUE PROCESSING METHOD, AND PROGRAM**

(57)     This temperature measurement value processing device is provided with: an acquisition unit that acquires, from a temperature sensor, a plurality of measurement values indicating a distribution of radiation temperatures in a predetermined detection range; a standard deviation calculation unit that calculates a standard deviation of the plurality of measurement values; a background temperature calculation unit that calculates a background temperature in a detection range on the basis of the plurality of measurement values; a threshold value calculation unit that calculates a threshold value by multiplying the standard deviation by a predetermined coefficient; a determination unit that determines whether or not the plurality of measurement values are included in a numerical value range based on the background temperature and the threshold value; and an output unit that outputs the result of determination by the determination unit.

FIG. 1

EP 4 206 632 A1

**Description**

Technical Field

The present disclosure relates to a temperature measurement value processing device, a heat generation body detection device, a temperature measurement value processing method, and a program. This application claims the right of priority based on Japanese Patent Application No. 2020-211639 filed with the Japan Patent Office on December 21, 2020, the content of which is incorporated herein by reference.

Background Art

PTL 1 describes an example of a device that detects a heat source, based on two-dimensional data output from an infrared detection device having two-dimensionally disposed infrared detection elements. In the device described in PTL 1, a background temperature of a detection space is calculated based on the two-dimensional data output in time series from the infrared detection device, and data that is equal to or higher than a threshold value set in advance from the background temperature is extracted as the heat source.

Citation List

Patent Literature

[PTL 1] Japanese Unexamined Patent Application Publication No. 2012-225694

Summary of Invention

Technical Problem

However, in the device described in PTL 1, since the threshold value is set in advance to a value of 1.5 times the dark field noise of the infrared detection device, in a case where the background temperature approaches the temperature of the heat source such that a temperature difference is less than the threshold value, there is a problem that it cannot be determined to be the heat source.

The present disclosure has been made to solve the above problem, and has an object to provide a temperature measurement value processing device, a heat generation body detection device, a temperature measurement value processing method, and a program, in which it is possible to improve robustness against a change in background temperature.

Solution to Problem

In order to solve the above problem, a temperature measurement value processing device according to the present disclosure includes: an acquisition unit that acquires a plurality of measurement values indicating a radiation temperature distribution in a predetermined detection range from a temperature sensor; a standard deviation calculation unit that calculates a standard deviation of the plurality of measurement values; a background temperature calculation unit that calculates a background temperature of the detection range, based on the plurality of measurement values; a threshold value calculation unit that calculates a threshold value by multiplying the standard deviation by a predetermined coefficient; a determination unit that determines whether or not the plurality of measurement values are included in a numerical value range, based on the background temperature and the threshold value; and an output unit that outputs a determination result of the determination unit.

A heat generation body detection device according to the present disclosure includes: a temperature sensor that outputs a plurality of measurement values indicating a radiation temperature distribution in a predetermined detection range; and a temperature measurement value processing device, in which the temperature measurement value processing device includes an acquisition unit that acquires the plurality of measurement values from the temperature sensor, a standard deviation calculation unit that calculates a standard deviation of the plurality of measurement values, a background temperature calculation unit that calculates a background temperature of the detection range, based on the plurality of measurement values, a threshold value calculation unit that calculates a threshold value by multiplying the standard deviation by a predetermined coefficient, a determination unit that determines whether or not the plurality of measurement values are included in a numerical value range, based on the background temperature and the threshold value, and an output unit that outputs a determination result of the determination unit.

A temperature measurement value processing method according to the present disclosure includes: a step of acquiring a plurality of measurement values indicating a radiation temperature distribution in a predetermined detection range from a temperature sensor; a step of calculating a standard deviation of the plurality of measurement values; a step of calculating a background temperature of the detection range, based on the plurality of measurement values; a step of calculating a threshold value by multiplying the standard deviation by a predetermined coefficient; a step of determining whether or not the plurality of measurement values are included in a numerical value range, based on the background temperature and the threshold value; and a step of outputting a result of the determination.

A program according to the present disclosure causes a computer to execute: a step of acquiring a plurality of measurement values indicating a radiation temperature distribution in a predetermined detection range from a temperature sensor; a step of calculating a standard deviation of the plurality of measurement values; a step of calculating a background temperature of the detection range, based on the plurality of measurement values; a step of calculating a threshold value by multiplying the standard deviation by a predetermined coefficient; a step of determining whether or not the plurality of measurement values are included in a numerical value range, based on the background temperature and the threshold value; and a step of outputting a result of the determination. Advantageous Effects of Invention

According to the temperature measurement value processing device, the heat generation body detection device, the temperature measurement value processing method, and the program of the present disclosure, it is possible to improve robustness against a change in background temperature.

Brief Description of Drawings

Fig. 1 is a block diagram showing a configuration example of a heat generation body detection device according to an embodiment of the present disclosure.
Fig. 2 is a flowchart showing a first operation example of a temperature measurement value processing device 2 shown in Fig. 1.
Fig. 3 is a schematic diagram for explaining the first operation example of the temperature measurement value processing device 2 shown in Fig. 1.
Fig. 4 is a schematic diagram for explaining the first operation example of the temperature measurement value processing device 2 shown in Fig. 1.
Fig. 5 is a schematic diagram for explaining the first operation example of the temperature measurement value processing device 2 shown in Fig. 1.
Fig. 6 is a flowchart showing a second operation example of the temperature measurement value processing device 2 shown in Fig. 1.
Fig. 7 is a schematic diagram for explaining the second operation example of the temperature measurement value processing device 2 shown in Fig. 1.
Fig. 8 is a schematic diagram for explaining the second operation example of the temperature measurement value processing device 2 shown in Fig. 1.
Fig. 9 is a schematic diagram for explaining the second operation example of the temperature measurement value processing device 2 shown in Fig. 1.
Fig. 10 is a schematic block diagram showing the configuration of a computer according to an embodiment of the present disclosure.

Description of Embodiments

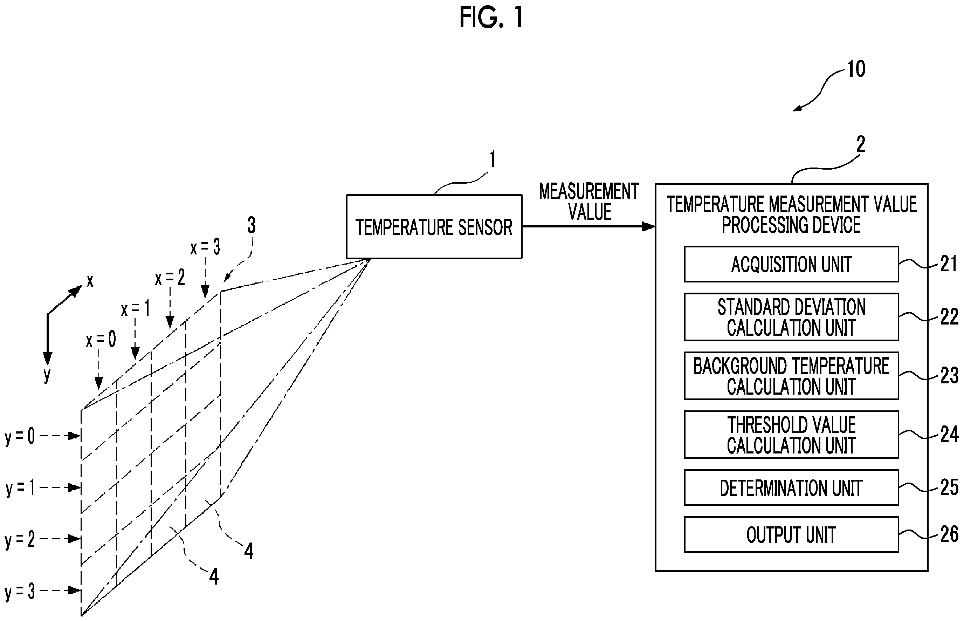

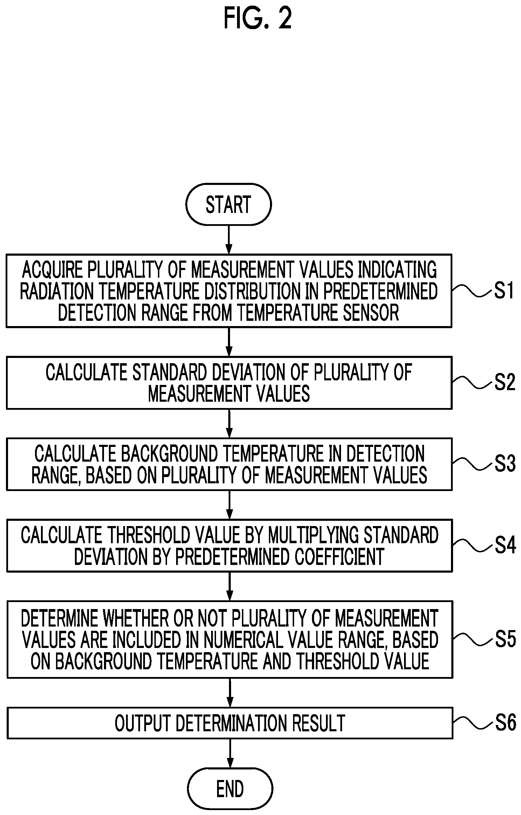

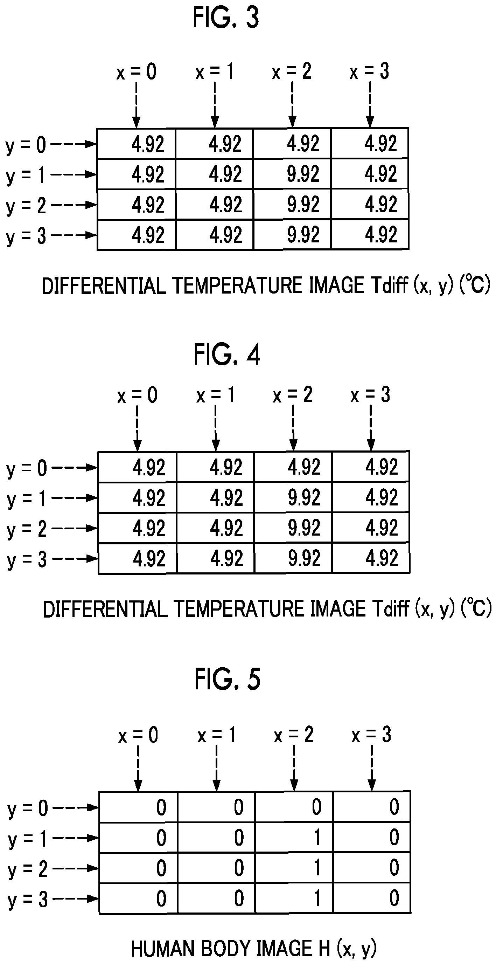

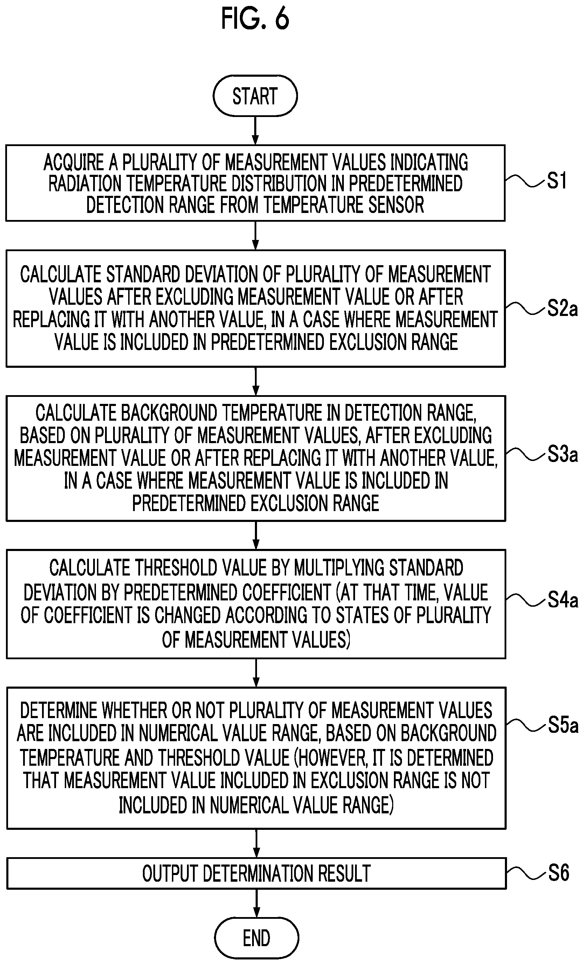

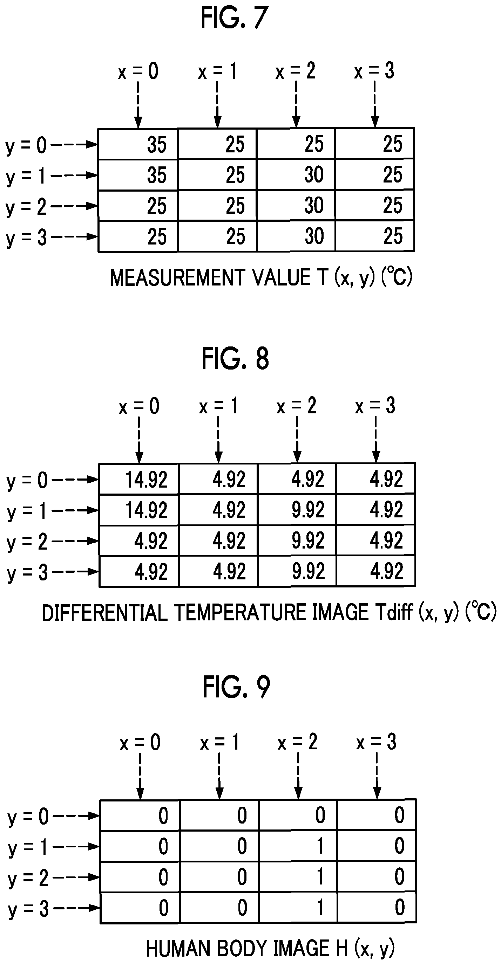

Hereinafter, a temperature measurement value processing device, a heat generation body detection device, a temperature measurement value processing method, and a program according to an embodiment of the present disclosure will be described with reference to the drawings. Fig. 1 is a block diagram showing a configuration example of the heat generation body detection device according to an embodiment of the present disclosure. Fig. 2 is a flowchart showing a first operation example of a temperature measurement value processing device 2 shown Fig. 1. Figs. 3 to 5 are schematic diagrams for explaining the first operation example of the temperature measurement value processing device 2 shown in Fig. 1. Fig. 6 is a flowchart showing a second operation example of the temperature measurement value processing device 2 shown in Fig. 1. Figs 7 to 9 are schematic diagrams for explaining the second operation example of the temperature measurement value processing device 2 shown in Fig. 1. In each drawing, identical or corresponding configurations are denoted by the same reference numerals and the description thereof will be omitted as appropriate.

(Configuration of Heat Generation Body Detection Device)

As shown in Fig. 1, a heat generation body detection device 10 includes a temperature sensor 1 and the temperature measurement value processing device 2.

The temperature sensor 1 is a sensor unit that includes an infrared detection element such as a thermopile array sensor, for example, an optical system, a circuit for processing an output signal of the infrared detection element, and the like, and repeatedly outputs a plurality of measurement values T(x, y) (°C) indicating a radiation temperature distribution in a detection range 3 in time series. In the example shown in Fig. 1, the temperature sensor 1 measures a radiation temperature for each of 16 partial regions (or temperature cells) 4 obtained by dividing the detection range 3 into four regions vertically and four regions horizontally, and outputs a measurement value T(x, y) (x = 0, 1, 2, and 3, and y = 0, 1, 2, and 3) of the radiation temperature. Here, x and y are a lateral (horizontal) coordinate value and a longitudinal (vertical) coordinate value of the partial region 4. The detection range 3 may be set outdoors. However, in this example, the detection range 3 is assumed to be set indoors. Further, the measurement value T(x, y) is a two-dimensional array, and is a signal representing a thermal image in which a temperature is set to be a pixel value and an element number is set to be a pixel coordinate value. In the following, the two-dimensional array is also referred to as an image as appropriate.

The temperature measurement value processing device 2 is a device that determines whether or not a heat generation body such as a human body is present in each partial region 4, based on the measurement value T(x, y) output from the temperature sensor 1, and outputs a determination result. The temperature measurement value processing device 2 is configured using a computer and a peripheral circuit, a peripheral device, or the like of the computer, and includes an acquisition unit 21, a standard deviation calculation unit 22, a background temperature calculation unit 23, a threshold value calculation unit 24, a determination unit 25, and an output unit 26, as functional configurations configured by a combination of hardware such as the computer and software such as a program that is executed by the computer. In the following, the present embodiment will be described by taking as an example a case where the heat generation body to be detected is a human body. However, the heat generation body to be detected is not limited to the human body.

The acquisition unit 21 repeatedly acquires a plurality of measurement values T(x, y) indicating a radiation temperature distribution in the detection range 3 from the temperature sensor 1 at a predetermined period, for example.

The standard deviation calculation unit 22 calculates a standard deviation $\sigma$ (°C) of the plurality of measurement values T(x, y). At that time, the standard deviation calculation unit 22 calculates an average temperature (average value) Tave (°C) of the plurality of measurement values (x, y).

The background temperature calculation unit 23 calculates a background temperature Tb (°C) of the detection range 3 (a room in which the detection range 3 is set), based on the plurality of measurement values T(x, y). The background temperature Tb corresponds to, for example, the temperature or the like of a wall or a floor, and can be set to be the average temperature Tave (°C), the lowest temperature Tmin (= min T(x, y)) (°C), Tmin=Tave-3$\sigma$ obtained using the standard deviation $\sigma$ of the temperature distribution when assuming that the temperature distribution in the entire room is a normal distribution, or the like.

In a case where the measurement value T(x, y) is included in a predetermined exclusion range (for example, a range equal to higher than a certain temperature, a range equal to lower than a certain temperature, or the like), after excluding the measurement value T(x, y) or after replacing it with another value, the standard deviation calculation unit 22 and the background temperature calculation unit 23 may calculate the standard deviation $\sigma$ (and the average temperature Tave) and the background temperature Tb. For example, in a case where a high-temperature heat source such as a heater is present in the room, since some of the plurality of measurement values T(x, y) indicate high temperatures, the temperature distribution in the room may not be accurately measured. In such a case, when the measurement value T(x, y) is a value in a predetermined exclusion range (for example, 35°C or higher), after the measurement value T(x, y) is excluded from, for example, a calculation target or is replaced with the lowest temperature Tmin, the standard deviation calculation unit 22 can calculate the average temperature Tave and the standard deviation $\sigma$, and the background temperature calculation unit 23 can calculate the background temperature Tb.

The threshold value calculation unit 24 calculates a threshold value Shuman (°C) by multiplying the standard deviation $\sigma$ by a predetermined coefficient K. The threshold value calculation unit 24 calculates the threshold value Shuman by using an expression Shuman = K·$\sigma$. Here, the coefficient K is a real number constant set in advance. The coefficient K can be determined based on an experiment, simulation, or the like. Further, the determination unit 25 determines whether or not the plurality of measurement values T(x, y) are included in a numerical value range, based on the background temperature Tb and the threshold value Shuman.

The numerical value range in the determination unit 25 can be set to be, for example, a "range equal to or greater than Tb+Shuman". Alternatively, for example, the threshold value Shuman can be set to be two values of a lower limit threshold value Shuman1 (= K1·$\sigma$) and an upper limit threshold value Shuman2 (= K2·$\sigma$), and the numerical value range can be set to be a "range of Tb+Shuman1 or more and Tb+Shuman2 or less".

The determination unit 25 can normalize the background temperature Tb as 0°C, for example, by creating a differential temperature image Tdiff(x, y) = T(x, y) - Tb(°C) obtained by subtracting the background temperature Tb from the measurement value T(x, y), when performing a determination, and when being equal to or higher than the threshold value Shuman for a human body determination, it is determined to be a human body, and the human body image H(x, y) having the same number of arrays as the output of the temperature sensor 1 is binarized to determine whether it is a human body, and stored as a determination result. In this case, the determination unit 25 determines whether or not it is a human body, by the following expression.

$$\begin{cases} H(x,y) = 1 \;\; (\; Tdiff(x,y) \geq Shuman \;) \\ H(x,y) = 0 \;\; (\; Tdiff(x,y) < Shuman \;) \end{cases}$$

Here, H(x, y)=1 indicates that it is determined to be a human body, and H(x, y)=0 indicates that it is determined not to be a human body.

The determination unit 25 can determine that the measurement value T(x, y) included in the exclusion range is not included in the numerical value range (determines that it is not a human body), in a case where the standard deviation calculation unit 22 and the background temperature calculation unit 23 perform exclusion or replacement of the measurement value T(x, y) included in the exclusion range when calculating the standard deviation $\sigma$ and the background temperature Tb.

Further, the threshold value calculation unit 24 may change the value of the coefficient K by which the standard deviation $\sigma$ is multiplied, according to the states of the plurality of measurement values T(x, y). For example, in a case where there is a measurement value T(x, y) (temperature cell) equal to or higher than a certain exclusion threshold value (for example, 35°C), the threshold value calculation unit 24 can change the threshold value Shuman by changing the value of the coefficient K. For example, in a case where there is a high-temperature heat source such as a heater, since infrared rays are emitted into the room, an indoor temperature may be estimated to be high. In that case, since the temperature difference between the background temperature and the human body temperature becomes small, the coefficient (a constant of proportionality) by which the standard deviation $\sigma$ is multiplied is changed such that the threshold value Shuman for human body determination is reduced.

The output unit 26 outputs the determination result (human body image H(x, y)) of the determination unit 25. The temperature measurement value processing device 2 of the present embodiment can be configured integrally with, for example, the temperature sensor 1 (for example, configured in a form in which it is included in a processing circuit in the temperature sensor 1), and in this case, the output unit 26 can output the determination result of the determination unit 25 to the outside, for example, as a serial signal in a predetermined format. Alternatively, the temperature measurement value processing device 2 can be configured in a form in which it is included in a controller such as an air conditioner, and in this case, the output unit 26 can output the determination result in a form in which data is delivered to another program module or the like that is executed by the controller.

(First Operation Example of Temperature Measurement Value Processing Device 2)

Next, a first operation example of the temperature measurement value processing device 2 shown in Fig. 1 will be described with reference to Figs. 2 to 5. The processing shown in Fig. 2 is repeatedly executed, for example, at a predetermined period. When the processing shown in Fig. 2 is started, first, the acquisition unit 21 acquires a plurality of measurement values T(x, y) indicating the radiation temperature distribution in the detection range 3 from the temperature sensor 1 (step S1). In this example, it is assumed that the acquisition unit 21 acquires the measurement value T(x, y) shown in Fig. 3. Fig. 3 schematically shows the value of each element of the measurement value T(x, y). In the example shown in Fig. 3, the values of three elements of x = 2 and y = 1, 2, and 3 are 30°C, and the values of other elements are 25°C.

Next, the standard deviation calculation unit 22 calculates the average temperature Tave and the standard deviation $\sigma$ of the plurality of measurement values T(x, y) (step S2). In the example shown in Fig. 3, the average temperature Tave is 25.9°C, and the standard deviation $\sigma$ is 1.95°C.

Next, the background temperature calculation unit 23 calculates the background temperature Tb of the detection range 3, based on the plurality of measurement values T(x, y) (step S3). In this example, the background temperature calculation unit 23 calculates the background temperature Tb by an expression Tb = Tave-3$\sigma$ (= 20.1°C).

Next, the threshold value calculation unit 24 calculates the threshold value Shuman by multiplying the standard deviation $\sigma$ by the predetermined coefficient K (step S4). In this example, it is assumed that the threshold value calculation unit 24 calculates one threshold value by using the expression Shuman = K·$\sigma$. With respect to the coefficient K, in the case of an indoor space, when the background temperature is set to be Tb = Tave - 3$\sigma$, a value in the range of approximately 3.5 to 4.5 (in the range of approximately 0.5 to 1.5 when Tb = Tave) is a value suitable for the detection of the human body. In this example, K = 4 (Shuman = 7.1°C) is described.

Next, the determination unit 25 determines whether or not the plurality of measurement values T(x, y) are included in the numerical value range, based on the background temperature Tb and the threshold value Shuman (step S5). In this example, the determination unit 25 first calculates a differential temperature image Tdiff(x, y) (= T(x, y) - Tb). Fig. 4 schematically shows the calculation result of the differential temperature image Tdiff(x, y). Then, the determination unit 25 compares each element of the differential temperature image Tdiff(x, y) with the threshold value Shuman (= 7.1), and calculates the human body image H(x, y) indicating the determination result by using the relationship H(x, y) = 1 when Tdiff(x, y) $\geq$ Shuman, and the relationship H(x, y) = 0 when Tdiff(x, y) < Shuman. Fig. 5 schematically shows the calculation result of the human body image H(x, y). In the example shown in Fig. 5, it is determined that three elements of x = 2 and y = 1, 2, and 3 are the human body.

Next, the output unit 26 outputs the determination result (the human body image H(x, y)) (step S6).

(Operation and Effect of First Operation Example)

According to the first operation example, since the threshold value Shuman for the human body determination is changed according to the temperature distribution in the room, it is possible to provide a heat generation body detection technique (human body detection technique) that is robust against a change in indoor environment or the like, compared to a case where the threshold value Shuman is a constant.

(Second Operation Example of Temperature Measurement Value Processing Device 2)

Next, a second operation example of the temperature measurement value processing device 2 shown in Fig. 1 will be described with reference to Figs. 6 to 9. The second operation example is an operation example in a case where a high-temperature heat source such as a heater is present in the room. The processing shown in Fig. 6 is repeatedly executed, for example, at a predetermined period. When the processing shown in Fig. 6 is started, first, the acquisition unit 21 acquires a plurality of measurement values T(x, y) indicating the radiation temperature distribution in the detection range 3 from the temperature sensor 1 (step S1). In this example, it is assumed that the acquisition unit 21 acquires the measurement value T(x, y) shown in Fig. 7. Fig. 7 schematically shows the value of each element of the measurement value T(x, y). In the example shown in Fig.7, the values of three elements of x = 2 and y = 1, 2, and 3 are 30°C, the values of two elements of x = 0 and y = 1 and 2 are 35°C, and the values of other elements are 25°C.

Next, in a case where the measurement value T(x, y) is included in a predetermined exclusion range, after excluding the measurement value T(x, y) or after replacing it with another value, the standard deviation calculation unit 22 calculates the standard deviation $\sigma$ of the plurality of measurement values T(x, y) (step S2a). In this example, in a case where the exclusion range is set to be a "range of 35°C or higher" and the measurement value T(x, y) is included in the exclusion range, replacement with the lowest temperature Tmin (= 25°C) is performed. In the case of the example shown in Fig. 7, the average temperature Tave and the standard deviation $\sigma$ are calculated after the values of two elements of x = 0 and y = 1 and 2 are replaced from 35°C to 25°C. In the case of the example shown in Fig. 7, the average temperature Tave is 25.9°C, and the standard deviation $\sigma$ is 1.95°C.

Next, in a case where the measurement value T(x, y) is included in a predetermined exclusion range, after excluding the measurement value T(x, y) or after replacing it with another value, the background temperature calculation unit 23 calculates the background temperature Tb of the detection range 3, based on the plurality of measurement values T(x, y) (step S3a). In this example, the background temperature calculation unit 23 calculates the background temperature Tb by using the expression Tb = Tave - 3$\sigma$ (= 20.1°C), based on the average temperature Tave and the standard deviation $\sigma$ calculated after the standard deviation calculation unit 22 replaces the temperatures of the two partial regions 4 from 35°C to 25°C.

Next, the threshold value calculation unit 24 calculates the threshold value Shuman by multiplying the standard deviation $\sigma$ by a predetermined coefficient K (step S4a). However, in step S4a, the threshold value calculation unit 24 changes the value of the coefficient K according to the states of the plurality of measurement values. In this example, the threshold value calculation unit 24 determines whether or not there is a measurement value T(x, y) equal to or greater than an exclusion threshold value (for example, 35°C), and when it is determined that there is a measurement value (x, y) equal to or greater than the exclusion threshold value, the threshold value calculation unit 24 changes the coefficient K = 4 (Shuman = 7.1°C) when there is no measurement value (x, y) equal to or greater than the exclusion threshold value, to the coefficient K = 3.5 (Shuman = 6.8°C) when there is a measurement value (x, y) equal to or greater than the exclusion threshold value.

Next, the determination unit 25 determines whether or not the plurality of measurement values T(x, y) are included in the numerical value range, based on the background temperature Tb and the threshold value Shuman (step S5a). However, in step S5a, the determination unit 25 determines that the measurement value T(x, y) included in the exclusion range used in steps S2a and S3a is not included in the numerical value range based on the background temperature Tb and the threshold value Shuman. In this example, the determination unit 25 first calculates a differential temperature image Tdiff(x, y) (= T(x, y) - Tb). Fig. 8 schematically shows the calculation result of the differential temperature image Tdiff(x, y). Then, the determination unit 25 compares each element of the differential temperature image Tdiff (x, y) with the threshold value Shuman (= 6.8), and calculates the human body image H(x, y) indicating the determination result, by using the relationship H(x, y) = 1 when Tdiff(x, y) ≥ Shuman and the relationship H(x, y) = 0 when Tdiff(x, y) < Shuman. At that time, the determination unit 25 determines that two measurement values T(x, y) of x = 0 and y = 1 and 2 included in the exclusion range "range of 35°C or higher" are not included in the numerical value range based on the background temperature Tb and the threshold value Shuman, and sets the value of each element of the corresponding human body image H(x, y) to "0". Fig. 9 schematically shows the calculation result of the human body image H(x, y). In the example shown in Fig. 9, it is determined that three elements of x = 2 and y = 1, 2, and 3 are the human body.

Next, the output unit 26 outputs the determination result (the human body image H(x, y)) (step S6).

(Operation and Effect of Second Operation Example)

According to the second operation example, in addition to the effect of the first operation example, even in a case where a high-temperature heat source such as a heater is present in the room, the human body can be detected correctly.

(Other Embodiments)

The embodiment of the present disclosure has been described in detail above with reference to the drawings. However, the specific configuration is not limited to the embodiment, and a design change or the like within a scope which does not depart from the gist of the present disclosure is also included. For example, instead of the standard deviation, another index indicating variation of a sample may be used.

<Computer Configuration>

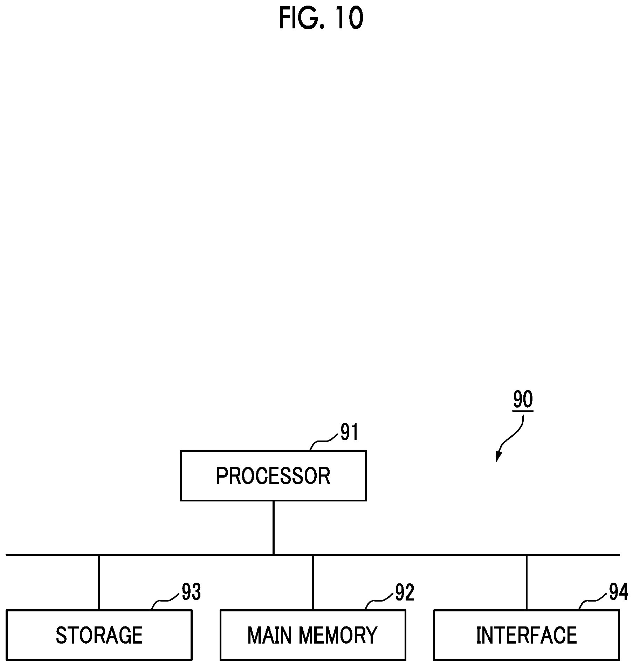

Fig. 10 is a schematic block diagram showing the configuration of a computer according to at least one embodiment.

A computer 90 includes a processor 91, a main memory 92, a storage 93, and an interface 94.

The temperature measurement value processing device described above is mounted in the computer 90. Then, the operation of each processing unit described above is stored in the storage 93 in the form of a program. The processor 91 reads out the program from the storage 93, develops it in the main memory 92, and executes the above processing according to the program. Further, the processor 91 secures a storage area corresponding to each storage unit described above in the main memory 92 according to the program.

The program may be a program for realizing a part of the functions that are exhibited by the computer 90. For example, the program may function in combination with another program already stored in the storage or in combination with another program installed in another device. In another embodiment, the computer may include a custom Large Scale Integrated Circuit (LSI) such as a Programmable Logic Device (PLD), in addition to or instead of the above configuration. As an example of PLD, Programmable Array Logic (PAL), Generic Array Logic (GAL), Complex Programmable Logic Device (CPLD), Field Programmable Gate Array (FPGA), or the like can be given. In this case, a part or all of the functions that are realized by the processor may be realized by the integrated circuit.

As an example of the storage 93, Hard Disk Drive (HDD), Solid State Drive (SSD), a magnetic disk, a magneto-optical disk, Compact Disc Read Only Memory (CD-ROM), Digital Versatile Disc Read Only Memory (DVD-ROM), a semiconductor memory, or the like can be given. The storage 93 may be an internal medium directly connected to the bus of the computer 90, or an external medium connected to the computer 90 through an interface 94 or communication line. Further, in a case where this program is distributed to the computer 90 via a communication line, the computer 90 receiving the distribution may develop the program in the main memory 92 and execute the above processing. In at least one embodiment, the storage 93 is a non-transitory and tangible storage medium.

<Additional Remark>

The temperature measurement value processing device 2 described in the embodiment of the present disclosure is understood as follows, for example.

(1) A temperature measurement value processing device 2 according to a first aspect includes: the acquisition unit 21 that acquires a plurality of measurement values indicating a radiation temperature distribution in a predetermined detection range 3 from the temperature sensor 1; the standard deviation calculation unit 22 that calculates a standard deviation σ of the plurality of measurement values; the background temperature calculation unit 23 that calculates the background temperature Tb of the detection range 3, based on the plurality of measurement values; the threshold value calculation unit 24 that calculates the threshold value Shuman by multiplying the standard deviation σ by a predetermined coefficient K; the determination unit 25 that determines whether or not the plurality of measurement values are included in a numerical value range, based on the background temperature Tb and the threshold value Shuman; and the output unit 26 that outputs a determination result of the determination unit 25. According to this aspect and the following each aspect, since the threshold value Shuman for a determination of the heat generation body such as a human body is changed according to the temperature distribution, it is possible to provide a heat generation body detection technique that is robust against a change in indoor environment or the like, compared to a case where the threshold value Shuman is a constant.

(2) In a temperature measurement value processing device 2 according to a second aspect, in the temperature measurement value processing device 2 of (1), in a case where the measurement value is included in a predetermined exclusion range, after excluding the measurement value or after replacing it with another value, the standard deviation calculation unit 22 calculates the standard deviation σ, and the background temperature calculation unit 23 calculates the background temperature Tb. According to this configuration, even in a case where a high-temperature heat source such as a heater is present, the temperature distribution can be correctly measured, and the value of the threshold value Shuman can be appropriately set.

(3) In a temperature measurement value processing device 2 according to a third aspect, in the temperature measurement value processing device 2 of (2), the determination unit 25 determines that the measurement value included in the exclusion range is not included in the numerical value range.

(4) In a temperature measurement value processing device 2 according to a fourth aspect, in the temperature measurement value processing device 2 of (1) to (3), the threshold value calculation unit 24 changes a value of the coefficient according to states of the plurality of measurement values. According to this configuration, the value of the threshold value Shuman can be appropriately set.

(5) In a temperature measurement value processing device 2 according to a fifth aspect, in the temperature measurement value processing device 2 of (1) to (4), the coefficient K is set to a value suitable for detection of a human body.

Industrial Applicability

According to each aspect of the present invention, it is possible to improve robustness against a change in background temperature.

Reference Signs List

1: temperature sensor
2: temperature measurement value processing device
3: detection range
10: heat generation body detection device
21: acquisition unit
22: standard deviation calculation unit
23: background temperature calculation unit
24: threshold value calculation unit
25: determination unit
26: output unit

Claims

1. A temperature measurement value processing device comprising:

an acquisition unit that acquires a plurality of measurement values indicating a radiation temperature distribution in a predetermined detection range from a temperature sensor;
a standard deviation calculation unit that calculates a standard deviation of the plurality of measurement values;
a background temperature calculation unit that calculates a background temperature of the detection range, based on the plurality of measurement values;
a threshold value calculation unit that calculates a threshold value by multiplying the standard deviation by a predetermined coefficient;
a determination unit that determines whether or not the plurality of measurement values are included in a numerical value range, based on the background temperature and the threshold value; and
an output unit that outputs a determination result of the determination unit.

2. The temperature measurement value processing device according to claim 1, wherein in a case where the measurement value is included in a predetermined exclusion range,

after excluding the measurement value or after replacing the measurement value with another value,
the standard deviation calculation unit calculates the standard deviation, and
the background temperature calculation unit calculates the background temperature.

3. The temperature measurement value processing device according to claim 2, wherein the determination unit determines that the measurement value included in the exclusion range is not included in the numerical value range.

4. The temperature measurement value processing device according to any one of claims 1 to 3, wherein the threshold value calculation unit changes a value of the coefficient according to states of the plurality of measurement values.

5. The temperature measurement value processing device according to any one of claims 1 to 4, wherein the coefficient is set to a value suitable for detection of a human body.

6. A heat generation body detection device comprising:

a temperature sensor that outputs a plurality of measurement values indicating a radiation temperature distribution in a predetermined detection range; and
a temperature measurement value processing device,
wherein the temperature measurement value processing device includes

an acquisition unit that acquires the plurality of measurement values from the temperature sensor,
a standard deviation calculation unit that calculates a standard deviation of the plurality of measurement values,
a background temperature calculation unit that calculates a background temperature of the detection range, based on the plurality of measurement values,
a threshold value calculation unit that calculates a threshold value by multiplying the standard deviation by a predetermined coefficient, a determination unit that determines whether or not the plurality of measurement values are included in a numerical value range, based on the background temperature and the threshold value, and
an output unit that outputs a determination result of the determination unit.

7. A temperature measurement value processing method comprising:

a step of acquiring a plurality of measurement values indicating a radiation temperature distribution in a predetermined detection range from a temperature sensor;
a step of calculating a standard deviation of the plurality of measurement values;
a step of calculating a background temperature of the detection range, based on the plurality of measurement values;
a step of calculating a threshold value by multiplying the standard deviation by a predetermined coefficient;
a step of determining whether or not the plurality of measurement values are included in a numerical value range, based on the background temperature and the threshold value; and
a step of outputting a result of the determination.

8. A program that causes a computer to execute:

a step of acquiring a plurality of measurement values indicating a radiation temperature distribution in a predetermined detection range from a temperature sensor;
a step of calculating a standard deviation of the plurality of measurement values;

a step of calculating a background temperature of the detection range, based on the plurality of measurement values;

a step of calculating a threshold value by multiplying the standard deviation by a predetermined coefficient;

a step of determining whether or not the plurality of measurement values are included in a numerical value range, based on the background temperature and the threshold value; and

a step of outputting a result of the determination.

# FIG. 1

## FIG. 2

START

ACQUIRE PLURALITY OF MEASUREMENT VALUES INDICATING RADIATION TEMPERATURE DISTRIBUTION IN PREDETERMINED DETECTION RANGE FROM TEMPERATURE SENSOR — S1

CALCULATE STANDARD DEVIATION OF PLURALITY OF MEASUREMENT VALUES — S2

CALCULATE BACKGROUND TEMPERATURE IN DETECTION RANGE, BASED ON PLURALITY OF MEASUREMENT VALUES — S3

CALCULATE THRESHOLD VALUE BY MULTIPLYING STANDARD DEVIATION BY PREDETERMINED COEFFICIENT — S4

DETERMINE WHETHER OR NOT PLURALITY OF MEASUREMENT VALUES ARE INCLUDED IN NUMERICAL VALUE RANGE, BASED ON BACKGROUND TEMPERATURE AND THRESHOLD VALUE — S5

OUTPUT DETERMINATION RESULT — S6

END

## FIG. 3

|  | x = 0 | x = 1 | x = 2 | x = 3 |
|---|---|---|---|---|
| y = 0 | 4.92 | 4.92 | 4.92 | 4.92 |
| y = 1 | 4.92 | 4.92 | 9.92 | 4.92 |
| y = 2 | 4.92 | 4.92 | 9.92 | 4.92 |
| y = 3 | 4.92 | 4.92 | 9.92 | 4.92 |

DIFFERENTIAL TEMPERATURE IMAGE Tdiff (x, y) (°C)

## FIG. 4

|  | x = 0 | x = 1 | x = 2 | x = 3 |
|---|---|---|---|---|
| y = 0 | 4.92 | 4.92 | 4.92 | 4.92 |
| y = 1 | 4.92 | 4.92 | 9.92 | 4.92 |
| y = 2 | 4.92 | 4.92 | 9.92 | 4.92 |
| y = 3 | 4.92 | 4.92 | 9.92 | 4.92 |

DIFFERENTIAL TEMPERATURE IMAGE Tdiff (x, y) (°C)

## FIG. 5

|  | x = 0 | x = 1 | x = 2 | x = 3 |
|---|---|---|---|---|
| y = 0 | 0 | 0 | 0 | 0 |
| y = 1 | 0 | 0 | 1 | 0 |
| y = 2 | 0 | 0 | 1 | 0 |
| y = 3 | 0 | 0 | 1 | 0 |

HUMAN BODY IMAGE H (x, y)

# FIG. 6

START

↓

ACQUIRE A PLURALITY OF MEASUREMENT VALUES INDICATING RADIATION TEMPERATURE DISTRIBUTION IN PREDETERMINED DETECTION RANGE FROM TEMPERATURE SENSOR ~S1

↓

CALCULATE STANDARD DEVIATION OF PLURALITY OF MEASUREMENT VALUES AFTER EXCLUDING MEASUREMENT VALUE OR AFTER REPLACING IT WITH ANOTHER VALUE, IN A CASE WHERE MEASUREMENT VALUE IS INCLUDED IN PREDETERMINED EXCLUSION RANGE ~S2a

↓

CALCULATE BACKGROUND TEMPERATURE IN DETECTION RANGE, BASED ON PLURALITY OF MEASUREMENT VALUES, AFTER EXCLUDING MEASUREMENT VALUE OR AFTER REPLACING IT WITH ANOTHER VALUE, IN A CASE WHERE MEASUREMENT VALUE IS INCLUDED IN PREDETERMINED EXCLUSION RANGE ~S3a

↓

CALCULATE THRESHOLD VALUE BY MULTIPLYING STANDARD DEVIATION BY PREDETERMINED COEFFICIENT (AT THAT TIME, VALUE OF COEFFICIENT IS CHANGED ACCORDING TO STATES OF PLURALITY OF MEASUREMENT VALUES) ~S4a

↓

DETERMINE WHETHER OR NOT PLURALITY OF MEASUREMENT VALUES ARE INCLUDED IN NUMERICAL VALUE RANGE, BASED ON BACKGROUND TEMPERATURE AND THRESHOLD VALUE (HOWEVER, IT IS DETERMINED THAT MEASUREMENT VALUE INCLUDED IN EXCLUSION RANGE IS NOT INCLUDED IN NUMERICAL VALUE RANGE) ~S5a

↓

OUTPUT DETERMINATION RESULT ~S6

↓

END

# FIG. 7

| | x = 0 | x = 1 | x = 2 | x = 3 |
|---|---|---|---|---|
| y = 0 | 35 | 25 | 25 | 25 |
| y = 1 | 35 | 25 | 30 | 25 |
| y = 2 | 25 | 25 | 30 | 25 |
| y = 3 | 25 | 25 | 30 | 25 |

MEASUREMENT VALUE T (x, y) (℃)

# FIG. 8

| | x = 0 | x = 1 | x = 2 | x = 3 |
|---|---|---|---|---|
| y = 0 | 14.92 | 4.92 | 4.92 | 4.92 |
| y = 1 | 14.92 | 4.92 | 9.92 | 4.92 |
| y = 2 | 4.92 | 4.92 | 9.92 | 4.92 |
| y = 3 | 4.92 | 4.92 | 9.92 | 4.92 |

DIFFERENTIAL TEMPERATURE IMAGE Tdiff (x, y) (℃)

# FIG. 9

| | x = 0 | x = 1 | x = 2 | x = 3 |
|---|---|---|---|---|
| y = 0 | 0 | 0 | 0 | 0 |
| y = 1 | 0 | 0 | 1 | 0 |
| y = 2 | 0 | 0 | 1 | 0 |
| y = 3 | 0 | 0 | 1 | 0 |

HUMAN BODY IMAGE H (x, y)

# FIG. 10

## INTERNATIONAL SEARCH REPORT

| International application No. |
| --- |
| **PCT/JP2021/042113** |

**A. CLASSIFICATION OF SUBJECT MATTER**

*G01J 5/48*(2022.01)i; *G01V 8/10*(2006.01)i; *G01V 8/20*(2006.01)i
FI:    G01J5/48 A; G01V8/10 S; G01V8/20 Q

According to International Patent Classification (IPC) or to both national classification and IPC

**B. FIELDS SEARCHED**

Minimum documentation searched (classification system followed by classification symbols)
G01J5/00-5/90; G01V1/00-99/00; G01J1/00-1/60

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-251924 A (TOSHIBA CORP) 20 December 2012 (2012-12-20) paragraphs [0010], [0015]-[0019] | 1, 6-8 |
| Y | | 2-5 |
| Y | JP 2001-108758 A (MATSUSHITA ELECTRIC IND CO LTD) 20 April 2001 (2001-04-20) paragraphs [0004], [0006] | 2-5 |
| Y | JP 2017-58213 A (RICOH CO LTD) 23 March 2017 (2017-03-23) paragraphs [0002], [0040], [0050], fig. 12 | 2-5 |
| A | JP 2012-225694 A (NIPPON CERAMIC CO LTD) 15 November 2012 (2012-11-15) | 1-8 |
| A | WO 2017/029762 A1 (MITSUBISHI ELECTRIC CORP ) 23 February 2017 (2017-02-23) | 1-8 |
| A | US 2016/0116343 A1 (GOOGLE INC) 28 April 2016 (2016-04-28) | 1-8 |
| A | US 2016/0161339 A1 (INTEL CORPORATION) 09 June 2016 (2016-06-09) | 1-8 |

☐ Further documents are listed in the continuation of Box C.    ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **17 January 2022** | **01 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| | International application No. |
|---|---|
| | **PCT/JP2021/042113** |

| Patent document cited in search report | | | Publication date (day/month/year) | Patent family member(s) | | | Publication date (day/month/year) |
|---|---|---|---|---|---|---|---|
| JP | 2012-251924 | A | 20 December 2012 | (Family: none) | | | |
| JP | 2001-108758 | A | 20 April 2001 | (Family: none) | | | |
| JP | 2017-58213 | A | 23 March 2017 | (Family: none) | | | |
| JP | 2012-225694 | A | 15 November 2012 | (Family: none) | | | |
| WO | 2017/029762 | A1 | 23 February 2017 | (Family: none) | | | |
| US | 2016/0116343 | A1 | 28 April 2016 | WO | 2016/064562 | A2 | |
| US | 2016/0161339 | A1 | 09 June 2016 | WO | 2016/089540 | A1 | |

Form PCT/ISA/210 (patent family annex) (January 2015)

## REFERENCES CITED IN THE DESCRIPTION

**Patent documents cited in the description**

- JP 2020211639 A
- JP 2012225694 A